Europäisches Patentamt

European Patent Office

Office européen des brevets

(19)

(11) Numéro de publication: **0 184 507**
**B1**

# (12) FASCICULE DE BREVET EUROPEEN

(45) Date de publication du fascicule du brevet:
**20.04.88**

(21) Numéro de dépôt: **85402356.1**

(22) Date de dépôt: **29.11.85**

(51) Int. Cl.⁴: **C 22 B 26/10,** C 22 B 26/12,
C 22 B 9/02, G 21 C 19/30

(54) **Procédé et dispositif de traitement préalable de sodium liquide contenant des impuretés dissoutes.**

(30) Priorité: **04.12.84 FR 8418480**

(43) Date de publication de la demande:
**11.06.86 Bulletin 86/24**

(45) Mention de la délivrance du brevet:
**20.04.88 Bulletin 88/16**

(84) Etats contractants désignés:
**BE DE FR GB IT NL**

(56) Documents cités:
**EP - A - 0 012 074**
**FR - A - 2 312 276**
**FR - A - 2 544 999**
**US - A - 2 745 552**
**US - A - 2 983 599**

(73) Titulaire: **NOVATOME, La Boursidière R.N. 186,
F-92357 Le Plessis Robinson (FR)**

(72) Inventeur: **Lebaud, Patrice, 60 rue Marie Fichet,
F-92140 Clamart (FR)**

(74) Mandataire: **Bressand, Georges et al, c/o CABINET
LAVOIX 2 Place d'Estienne d'Orves, F-75441 Paris
Cedex 09 (FR)**

ACTORUM AG

### Description

L'invention concerne un procédé et un dispositif de traitement préalable de sodium liquide contenant des impuretés dissoutes, avant épuration ou dosage de ces impuretés.

Le fluide de refroidissement des chaudières nucléaires à neutron rapides est très souvent du sodium liquide dont il est nécessaire de surveiller et de maintenir à un niveau le plus bas possible, la teneur en impuretés et plus particulièrement en impuretés dissoutes telles que des oxydes, des hydrures ou de l'hydrogène.

Ces impuretés peuvent être introduites dans la chaudière nucléaire au moment de la mise en place des composants lors du renouvellement du combustible ou du remplissage en sodium ou bien encore lorsqu'il se produit des fuites d'eau ou de vapeur dans des générateurs de vapeur. Ces impuretes continuent également à se former, au sein du sodium liquide de refroidissement, pendant le fonctionnement du réacteur, si bien que la teneur de ce sodium liquide de refroidissement en impuretées peut devenir excessive.

De nombreux phénomènes sont liés directement au taux d'impuretés dans le sodium ou à la forme sous laquelle se trouvent ces impuretés. Par exemple, la corrosion apparaît pour des valeurs excessives du taux de soude et le bouchage des tuyauteries pour des valeurs importantes du taux d'hydrure et d'oxyde. Par ailleurs, la détection d'hydrogène par diffusion ne peut se fair que si l'hydrogène est sous forme de gaz dissous.

Il est donc extrèmement important de surveiller la teneur en impuretés dissoutes du sodium liquide de refroidissement du réacteur et d'épurer le sodium pour limiter cette teneur à une valeur acceptable ainsi que de transformer les corps chimiques non piégeables ou non détectables en corps chimiques piégeables ou détectables.

On connaît des dispositifs de purification du sodium dans lesquels on refroidit le sodium liquide avant de le faire passer dans une enceinte de précipitation ou sur un filtre en fibres métalliques, les impuretés dissoutes telles que les oxydes ou les hydrures se déposent dans l'enceinte ou sur les fibres du filtre (voir par exemple US-A-2745552).

Cependant, certains composés chimiques qui se forment dans le sodium tels que la soude, ne peuvent être piégés efficacement par solidification dans les conditions d'utilisation du filtre et en particulier lorsque la température initiale du sodium est relativement basse, par exemple inférieure à 300°C , voire même à 250°C. Ces composés, en particulier la soude peuvent être particulièrement néfastes et entraîner des détériorations sensibles des composants du réacteur en contact avec le sodium liquide.

Le dosage de ces composés ne peut être réalisé en utilisant les appareils de dosage des hydrures, des oxydes ou de l'hydrogène connus actuellement. Ainsi, on ne peut effectuer une surveillance en continu du taux de soude contenu dans le sodium de refroidissement avec un appareil permettant le dosage des hydrures ou des oxydes.

Dans le cas des dispositifs de détection de fuites dans les générateurs de vapeur, par exemple utilisant une mesure de l'évolution du taux d'hydrogène dissous, l'hydrogène present sous forme d'hydrures n'est pas pris en compte, ce qui réduit considérablement la fiabilité de la détection.

Le but de l'invention est donc de proposer un procédé de traitement préalable de sodium liquide contenant des impuretés dissoutes dont la température initiale est inférieure à 300°C, avant épuration ou dosage de ces impuretés, permettant la séparation et/ou le dosage de toutes les impuretés, qu'elles soient du type séparables par refroidissement comme les oxydes ou les hydrures ou du type non séparables comme la soude.

Dans ce but, on porte et on maintient le sodium liquide à une température au moins égale à 500°C pour assurer la décomposition des impuretés qui ne peuvent être séparées du sodium par refroidissement ou dosées.

L'invention a également pour objet deux dispositifs, tels que définis aux reventications 5 et 6, permettant de mettre en oeuvre ce procédé.

Afin de bien faire comprendre l'invention, on va maintenant décrire, en se référant aux figures jointes en annexe, un dispositif permettant la mise en oeuvre du procédé suivant l'invention et son application à l'épuration du sodium liquide d'un réacteur nucléaire à neutrons rapides et au dosage de composés chimiques dans ce sodium liquide.

La figure 1 est une vue schématique d'un dispositif de traitement préalable de sodium liquide contenant des impuretés.

La figure 2 est une vue également schématique montrant l'utilisation d'un dispositif de traitement préalable comme représenté sur la figure 1 dans le cas de la purification de sodium liquide.

La figure 3 est une vue schématique montrant l'utilisation d'un dispositif de traitement préalable comme représenté sur la figure 1, dans le cas du dosage d'un composé, par exemple de la soude, dans du sodium liquide.

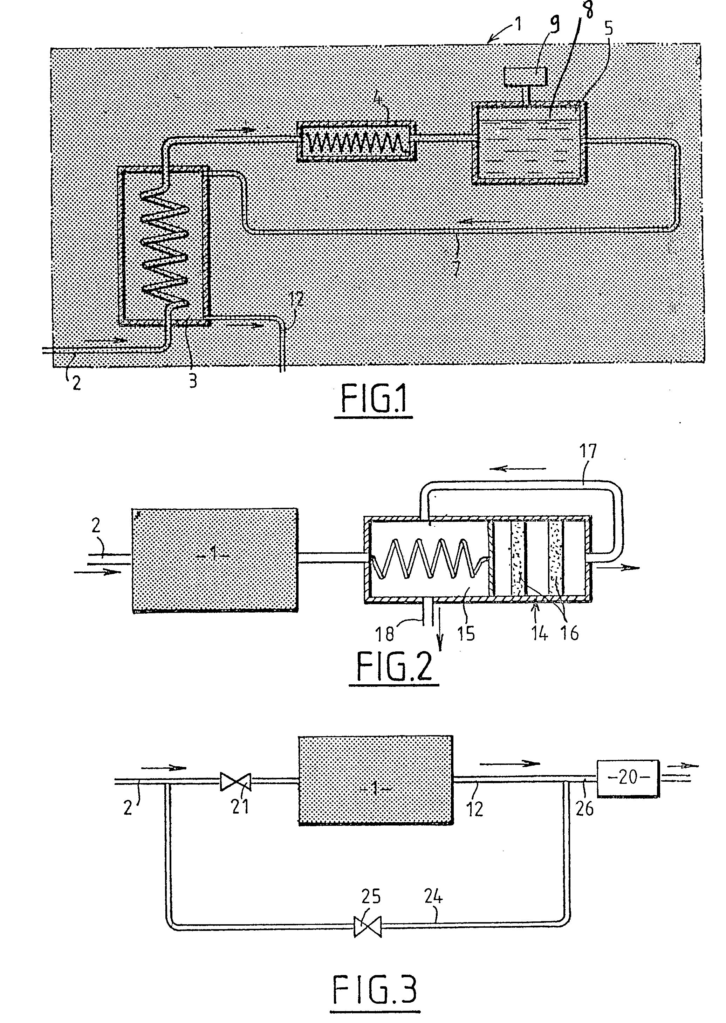

Sur la figure 1, on voit un dispositif de traitement préalable de sodium liquide désigné de façon générale par le repère 1. Le sodium liquide à traiter dont la température est voisine de 250°C est amené en continu par une conduite 2 dans le dispositif 1 où il pénètre tout d'abord dans un échangeur économiseur 3 puis dans un réchauffeur 4 qui élève la température de ce sodium liquide jusqu'à une température supérieure à 500°C. Le sodium liquide est mainenu à cette température supérieure à 500°C dans un réservoir 5 pendant une durée variable en fonction du composé chimique à décomposer mais généralement inférieure à 10 minutes et dans une canalisation 7 de retour du sodium liquide chaud dans l'échangeur économiseur 3.

Si le temps de transit dans cette canalisation 7 est suffisant, le réservoir 5 est inutile.

Le réservoir 5 est eventuellement en communication avec un dispositif de pompage ou de balayage 9 permettant de récupérer et d'éliminer les impuretés volatiles se dégageant au dessus du niveau de sodium 8 dans le reservoir 5 pendant le maintien en température de ce sodium.

A l'intérieur de l'échangeur économiseur 3, le sodium arrivant par la conduite 2 est réchauffé par le sodium venant du reservoir de maintien en température 5 par l'intermédiaire de la canalisation 7. Ce sodium ayant réchauffé le sodium entrant par la canalisation 2 sort de l'échangeur économiseur 3 par la canalisation 12 de sortie du dispositif de traitement préalable 1.

Dans le cas de sodium liquide utilisé comme fluide de refroidissement d'un réacteur nucléaire à neutrons rapides contenant des oxydes, des hydrures et de la soude comme impuretés dissoutes principales, le maintien du sodium à une température un peu supérieure à 500°C pour avoir un temps de traitement assez court (par exemple 120 secondes), permet une décomposition de la soude en oxyde $Na_2O$ et en hydrure NaH.

La proportion de soude dans le sodium liquide peut être comprise par exemple entre 10 ppm ($10^{-6}$) et quelques pourcents pour un sodium considéré comme très pollué.

Dans les conditions mentionnées ci-dessus, la décomposition de cette soude est pratiquement totale, la quantité résiduelle représentant à peine quelques pourcents de la quantité initiale contenue dans le sodium liquide.

Le réchauffeur 4 représenté sur la figure 1 est un réchauffeur à résistance électrique cédant sa chaleur au sodium liquide par contact direct.

On peut utiliser au lieu d'un réchauffeur à résistance électrique, un réchauffeur à induction constitué par un inducteur entourant une partie du circuit de sodium liquide extérieur à l'échangeur économiseur 3. Ce circuit constitue alors le secondaire d'un transformateur dans lequel le sodium est chauffé par effet Joule. Le sodium est alors chauffé dans l'ensemble du circuit et l'on évite ainsi d'avoir des parties de ce circuit à très haute température en contact avec le métal liquide, ce qui réduit d'autant la corrosion.

Pendant son temps de séjour dans le réservoir 5, les impuretés volatiles du sodium liquide sont éliminées pendant que la décomposition des impuretés telles que la soude ou les hydrures se produit.

Sur la figure 2, on voit un dispositif de traitement préalable 1 de sodium tel que représenté sur la figure 1 dont la canalisation de sortie 12 est reliée à l'entrée d'un dispositif de purification 14 du type à piège froid par exemple.

Un tel dispositif de purification 14 comporte des moyens de refroidissement 15 du sodium liquide et des éléments de filtration 16 en fibres métalliques. Les moyens de refroidissement 15 comportent en particulier un échangeur économiseur dans lequel le sodium entrant dans le dispositif de purification est refroidi par du sodium épuré recyclé dans l'échangeur économiseur par la canalisation 17.

Un tel dispositif de purification à piège froid connu permet de retenir les oxydes et les hydrures contenus dans le sodium entrant par la canalisation 12, par passage de ce sodium refroidi sur les filtres 16 ou dans les chambres de précipitation où il se produit une séparation des impuretés du sodium.

Dans le cas ou le sodium chaud entrant par la canalisation 12 a traversé préalablement un dispositif tel que représenté à la figure 1, les impuretés dans leur ensemble, y compris la soude, sont sous une forme permettant leur élimination dans le dispositif de purification par refroidissement. Ces impuretés sont en effet sous forme d'oxydes ou d'hydrures qui peuvent être séparés par un dispositif à refroidissement connu.

Le sodium recupéré par la canalisation 18 à la sortie du dispositif de purification 14 est donc un sodium exempt à la fois d'oxydes, d'hdrures et de soude.

Sur la figure 3, on voit un dispositif de traitement 1 tel que represented sur la figure 1 placé en amont d'un dispositif 20 permettant de déterminer par mesure differentielle la teneur en impuretés d'un courant de sodium liquide prélevé dans une installation nucléaire à neutrons rapides dont ce sodium constitue le fluide de refroidissement. Sur la canalisation d'entrée 2 du dispositif 1 est placée une vanne 21. Une canalisation 24 sur laquelle est placée une vanne 25 est mise en derivation par rapport à l'ensemble constitué par le dispositif de traitement 1 et la vanne 21.

Le dispositif 20 permet un dosage des composés tels que les oxydes et les hydrures par un indicateur de bouchage, c'est-à-dire un orifice calibré par lequel le sodium peut passer tant qu'il n'est pas trop chargé en impuretés. Cependant, ce dispositif de dosage ne permet pas de doser la soude. Dans le cas où l'on utilise un dispositif de dosage de l'hydrogène dissous à la place de l'indicateur de bouchage, celui-ci ne permet pas de doser l'hydrogène des hydrures.

Le dispositif 20 réalise des mesures électrochimiques ou physicochimiques sur le sodium lui parvenant en continu par sa canalisation d'entrée 26. Ces mesures sont révélatrices de la teneur du sodium en impuretés dosables telles que les oxydes et les hydrures ou dans le second cas, de l'hydrogène dissous.

Dans le cas où la vanne 25 est fermée et la vanne 21 ouverte, le sodium passe dans le dispositif de traitement 1 avant de parvenir au dispositif de mesure 20.

L'ensemble des impuretés contenues dans le sodium se présente alors sous une forme telle qu'elles peuvent être dosées. La mesure électrochimique ou physico chimique est alors représentative de la teneur totale en impuretés.

Si la vanne 21 est fermée et la vanne 25 ouverte, le sodium passe en derivation par rapport au dispositif de traitement 1, si bien que les resultats de mesures obtenues grâce au dispositif 20 seront représentatifs uniquement de la teneur en impuretés dosables telles que les oxydes et les hydrures, dans le premier cas (indicateur de bouchage) ou l'hydrogène dissous dans le second cas. Ces résultats ne sont pas représentatifs de la teneur en soude dans le premier cas et de l'hydrogene sous forme d'hydrures dans le second cas.

On pourra obtenir ainsi successivement par manoeuvre des vannes 21 et 25, une mesure de la teneur totale en impuretés et une mesure de la teneur en impuretés dosables dans le sodium liquide venant de l'installation nucléaire. Par difference, on obtiendra la teneur en impuretés non dosables telles que la soude ou les hydrures.

Dans le cas du dosage d'impuretés, le sodium est généralement peu pollué, la teneur en soude est inférieure à 10 ppm (10⁻⁶) et il est nécessaire d'élever la température du sodium dans le réchauffeur 4 du dispositif de traitement 1 jusqu'à 500°C au moins et de maintenir le sodium à cette température pendant une durée par exemple un peu supérieure à 120 secondes, pour obtenir une décomposition à 98% de la soude et des hydrures contenus dans le sodium. Dans le cas d'un dosage avec un indicateur de bouchage, on maintient de préférence, le sodium à 500°C environ, pendant 300 secondes au plus et 10 secondes au moins alors que dans le cas du dosage de l'hydrogène, il est préférable de porter le sodium à 650°C pendant le même temps. Dans ces conditions, les mesures sont tout-à-fait représentatives de la teneur en soude et en hydrogène et permettent un contrôle efficace et en continu du sodium de refroidissement de la chaudière.

La détermination de la teneur en impuretés dans le dispositif de mesure 20 peut être realisée par d'autres méthodes que la mesure électrochimique. On peut par exemple utiliser le phénomène de diffusion des impuretés à travers une membrane ou encore la précipitation des composés et leur dosage ultérieur.

On voit que le principal avantage du procédé suivant l'invention est de réaliser de façon très simple et très rapide une décomposition complète des impuretés non piégeables et non dosables dans le sodium liquide, de façon à obtenir des produits de décomposition séparables et dosables.

L'invention ne se limite pas aux modes de réalisation qui ont été décrits. C'est ainsi qu'on peut associer un dispositif de traitement préalable suivant l'invention à des dispositif de purification ou à des dispositifs de mesure différents de ceux qui ont été décrits.

On peut également mettre en oeuvre le procédé suivant l'invention dans des condition un peu différentes, en particulier en ce qui concerne la température d'échauffement du sodium et le temps de maintien de ce sodium à la température d'échauffement. Cependant, pour pouvoir mettre en oeuvre le procédé dans de bonnes conditions, en particulier pour obtenir une décomposition suffisante de la soude contenue dans le sodium, il est nécessaire de porter ce sodium à une température au moins égale à 500°C.

On peut également imaginer la mise en œuvre de l'invention avec des dispositifs d'un type différent de ceux qui ont été décrits, avec des moyens différents d'échauffement et de maintien en température du sodium liquide.

L'invention s'applique dans le cas de tout procédé ou toute industrie utilisant du sodium liquide dont il est nécessaire de contrôler la teneur en impuretés et en particulier aux boucles d'essais.

**Revendications**

1. Procédé de traitement préalable de sodium liquide contenant des impuretés dissoutes dont la température initiale est inférieure à 300°C, avant épuration ou dosage de ces impuretés, caractérisé par le fait qu'on porte et qu'on maintient le sodium liquide à une température au moins égale à 500°C pour assurer la décomposition des impuretés qui ne peuvent être séparées du sodium par refroidissement ou dosées.

2. Procédé de traitement suivant la revendication 1, dans le cas de la purification par refroidissement de sodium renfermant moins de 10 ppm d'impuretés non séparables par refroidissement, caractérisé par le fait qu'on maintient le sodium liquide à une température de 500°C environ pendant un temps compris entre 2 secondes et 120 secondes avant son refroidissement pour effectuer le piégeable des impuretés.

3. Procédé de traitement suivant la revendication 1, dans le cas où le sodium est utilisé pour un dosage d'impuretés par un indicateur de bouchage avec dissociation de la soude, caractérisé par le fait que le sodium est porté à une température d'environ 500°C pendant un temps compris entre 10 secondes et 300 secondes avant son introduction dans l'indicateur de bouchage.

4. Procédé de traitement suivant la revendication 1, dans le cas où le sodium est utilisé pour un dosage d'hydrogène avec dissociation des hydrures, caractérisé par le fait que le sodium est porté à une température d'environ 650°C pendant un temps compris entre 10 secondes et 300 secondes avant son introduction dans l'appareil de mesure.

5. Dispositif de traitement préalable de sodium liquide contenant des impuretés dissoutes, avant épuration ou dosage de ces impuretés, comportant un échangeur économiseur (3), un réchauffeur (4) et un réservoir (5) de maintien en température du sodium, disposés en série, l'échangeur économiseur (3) étant relié à la sortie du réservoir (5) de maintien en température par une canalisation (7) pour échauffer le sodium entrant dans le dispositif grâce à la chaleur venant du sodium du réservoir (5) de maintien et à un dispositif d'épuration par refroidissement ou de dosage des impuretés du sodium par une canalisation de sortie (12).

6. Dispositif de traitement préalable de sodium liquide contenant des impurétes dissoutes avant épuration ou dosage de ces impurétes comportant un échangeur économiseur (3) et un réchauffeur (4) disposés en série et une canalisation de liaison (7) de la sortie du réchauffeur (4) à l'échangeur économiseur constituant un volume de maintien en température du sodium liquide ainsi qu'une canalisation (12) de sortie de l'échangeur économiseur reliée à un dispositif d'épuration par refroidissement ou de dosage des impurétes du sodium.

7. Dispositif de traitement suivant l'une quelconque des revendications 5 et 6, caractérisé par le fait que le réchauffeur (4) est du type à résistance électrique.

8. Dispositif de traitement suivant l'une quelconque des revendications 5 et 6, caractérisé par le fait que le réchauffeur (4) est constitué par un inducteur entourant une partie du circuit de réchauffage du sodium, à l'extérieur de l'échangeur économiseur.

9. Dispositif de traitement suivant l'une quelconque des revendications 5 et 6, caractérisé par le fait que le dispositif (5) de maintien en température du sodium est un réservoir à niveau libre (8) associé à un dispositif de pompage et de balayage (9) placé au-dessus de ce niveau libre (8).

10. Dispositif de traitement suivant l'une quelconque des revendications 5 et 6, caractérisé par le fait qu'il comporte une canalisation d'entrée (2) sur laquelle est placée une vanne (21), une canalisation de sortie (12) le reliant à un dispositif de dosage d'impurétes (20) et une canalisation (24) en dérivation entre un point de la canalisation d'entrée (2) en amont de la vanne (21) et un point de la canalisation de sortie (12), cette canalisation (24) en dérivation étant équipée d'une vanne de fermeture (25).

**Patentansprüche**

1. · Verfahren zur Vorbehandlung von gelöste Verunreinigungen enhaltendem flüssigen Natrium, dessen Anfangstemperatur unterhalb von 300° C liegt, vor der Reinigung oder Dosierung dieser Verunreinigungen, dadurch gekennzeichnet, dass man das flüssige Natrium auf eine Temperatur von mindestens 500° C bringt und dabei hält, um eine Zersetzung der Verunreinigungen zu gewährleisten, die durch Abkühlung oder Zusätze nicht vom Natrium abgetrennt werden können.

2. Verfahren zur Behandlung gemäss Anspruch 1 für den Fall der Reinigung durch Abkühlung von Natrium, welches weniger als 10 ppm nicht durch Abkühlung abtrennbare Verunreinigungen enthält, dadurch gekennzeichnet, dass man das flüssige Natrium vor seiner Abkühlung über eine Zeit zwischen 2 sec und 120 sec bei einer Temperatur von etwa 500° C hält, um ein Abfangen der Verunreinigungen zu bewirken.

3. Verfahren zur Behandlung gemäss Anspruch 1 für den Fall, dass das Natrium zur Dosierung von Verunreinigungen durch einen Blockierungsanzeiger unter Dissoziation von Natriumcarbonat verwendet wird, dadurch gekennzeichnet, dass man das Natrium über eine Zeit zwischen 10 sec und 300 sec vor seiner Einbringung in den Blockierungsanzeiger auf eine Temperatur von etwa 500° C bringt.

4. Verfahren zur Behandlung gemäss Anspruch 1 für den Fall, dass das Natrium zur Dosierung von Wasserstoff unter Dissoziation der Wasserstoffverbindungen verwendet wird, dadurch gekennzeichnet, dass man das Natrium über eine Zeit zwischen 10 sec und 300 sec vor seiner Einbringung in das Messgerät auf eine Temperatur von etwa 650° C bringt.

5. Vorrichtung zur Vorbehandlung von gelöste Verunreinigungen enthaltendem flüssigen Natrium vor der Reinigung oder Dosierung dieser Verunreinigungen, mit einem Vorwärmeaustauscher (3), einem Vorwärmer (4) und einem Reservoir (5) zur Aufrechterhaltung der Temperatur des Natriums, die in Serie angeordnet sind, wobei der Vorwärmeaustauscher (3) durch eine Rohrleitung (7) an den Ausgang des Reservoirs (5) zur Aufrechterhaltung der Temperatur angeschlossen ist, um das in die Vorrichtung eintretende Natrium mit der vom Natrium des Reservoirs (5) zur Aufrechterhaltung kommenden Wärme zu erwärmen, und über eine Austrittsrohrleitung (12) verbunden ist mit einer Reinigungsvorrichtung zur Abkühlung oder Dosierung von Natriumverunreinigungen.

6. Vorrichtung zur Vorbehandlung von gelöste Verunreinigungen enthaltendem flüssigen Natrium vor der Reinigung oder Dosierung dieser Verunreinigungen, mit einem Vorwärmeaustauscher (3) und einem Vorwärmer (4), die in Serie angeordnet sind, und einer Verbindungsleitung (7) vom Ausgang des Vorwärmers (4) zum Vorwärmeaustauscher, die ein Volumen zur Aufrechterhaltung der Temperatur des flüssigen Natriums bildet, sowie einer Austrittsrohrleitung (12) des Vorwärmeaustauschers, die mit einer Vorrichtung zum Reinigen durch Abkühlen und zum Dosieren von Natriumverunreinigungen verbunden ist.

7. Vorrichtung zur Behandlung gemäss einem beliebigen der Ansprüche 5 und 6, dadurch gekennzeichnet, dass der Vorwärmer (4) vom Typ einer elektrischen Widerstandsheizung ist.

8. Vorrichtung zur Behandlung gemäss einem beliebigen der Ansprüche 5 und 6, dadurch gekennzeichnet, dass der Vorwärmer (4) durch einen Induktor gebildet wird, der ausserhalb des Vorwärmeaustauschers (3) einen Teil des Natriumerwärmungskreislaufs umgibt.

9. Vorrichtung zur Behandlung gemäss einem beliebigen der Ansprüche 5 und 6, dadurch gekennzeichnet, dass die Vorrichtung (5) zur Aufrechterhaltung der Temperatur des Natriums ein Reservoir mit freiem Niveau (8) ist, welches mit einer Pump- und Spüleinrichtung (9) verbunden ist, die oberhalb des freien Niveaus (8) angeordnet ist.

10. Vorrichtung zur Behandlung gemäss einem beliebigen der Ansprüche 5 und 6, gekennzeichnet durch eine Eintrittsrohrleitung (2), auf der ein Schieber (21) angeordnet ist, eine Austrittsrohrleitung (12), die sie mit einer Vorrichtung zum Dosieren von Verunreinigungen (20) verbindet, und eine Abzweigungsrohrleitung (24) zwischen einem Punkt der Eintrittsrohrleitung (2) strömungsaufwärts von dem Schieber (21) und einem Punkt der Austrittsrohrleitung (12), wobei die Abzweigungsrohrleitung (24) mit einem Verschlussschieber (25) ausgerüstet ist.

**Claims**

1. Method of pretreatment for liquid sodium containing dissolved impurities the initial temperature of which is less than 300°C, before purification or before determining the impurities content of these impurities, characterised in that the liquid sodium is brought to and maintained at a temperature of at least 500°C to ensure decomposition of the impurities which cannot be separated from the sodium by cooling or determined.

2. Method of treatment as claimed in claim 1 in the case of purification by cooling of sodium containing less than 10 ppm of impurities which cannot be separated by cooling, characterised in that the liquid sodium is kept at a temperature of about 500°C for a time ranging from 2 seconds to 120 seconds before being cooled in order to trap the impurities.

3. Method of treatment as claimed in claim 1, when the sodium is used in determining the impurities content by a clogging indicator with dissociation of the soda, characterised in that the sodium is heated to a temperature of about 500°C for a time ranging from 10 seconds to 300 seconds before being introduced into the clogging indicator.

4. Method of treatment as claimed in claim 1, when the sodium is used in determining the hydrogen content with dissociation of the hydrides, characterised in that the sodium is heated to a temperature of about 650°C for a time ranging from 10 seconds to 300 seconds before being introduced into the measuring apparatus.

5. Apparatus for pretreating liquid sodium containing dissolved impurities, before purification or before determining the impurities content, comprising an economising exchanger (3), a heater (4) and a temperature-maintaining reservoir (5) for the sodium, arranged in series, the economising exchanger (3) being connected to the outlet of the temperature maintaining reservoir (5) by means of a duct (7) for heating the sodium entering the apparatus by means of the heat from the sodium in the temperature maintaining reservoir (5) and to an apparatus for purification by cooling or for determining the content of the impurities in the sodium, by an outlet duct (12).

6. Apparatus for pretreatment of liquid sodium containing dissolved impurities before purification or before determining the impurities content, comprising an economising exchanger (3) and a heater (4) arranged in series and a connecting duct (7) linking the outlet from the heater (4) to the economising exchanger, constituting a temperature maintaining volume for the liquid sodium and an outlet duct (12) from the economising exchanger connected to an apparatus for purification by cooling or for determining the content of the impurities in the sodium.

7. Treatment apparatus as claimed in claim 5 or 6, characterised in that the heater (4) is of the electrical resistance type.

8. Treatment apparatus as claimed in claim 5 or 6, characterised in that the heater (4) consists of an inductor surrounding part of the sodium heating circuit, outside the economising exchanger.

9. Treatment apparatus as claimed in claim 5 or 6, characterised in that the apparatus (5) for maintaining the temperature of the sodium is a free level reservoir (8) associated with a pumping and flushing apparatus (9) located above this free level (8).

10. Treatment apparatus as claimed in claim 5 or 6, characterised in that it comprises an inlet duct (2) on which is placed a valve (21), an outlet duct (12) connecting it to an apparatus for determining the contact of impurities (20) and a bypass duct (24) between a point on the inlet duct (2) upstream of the valve (21) and a point on the outlet duct (12) this bypass duct (24) being fitted with a shutoff valve (25).

FIG.1

FIG.2

FIG.3